Europäisches Patentamt

(19) European Patent Office

Office européen des brevets

(11) Publication number: **0 034 888**
**B1**

(12) **EUROPEAN PATENT SPECIFICATION**

(45) Date of publication of patent specification: **02.05.84**

(51) Int. Cl.³: **F 16 B 5/06, F 16 L 23/04, F 24 F 13/02**

(21) Application number: **81300524.6**

(22) Date of filing: **09.02.81**

(54) **An edge connection arrangement for connecting premanufactured duct sections and/or equipment cabinets.**

(30) Priority: **21.02.80 DK 754/80**

(43) Date of publication of application:
**02.09.81 Bulletin 81/35**

(45) Publication of the grant of the patent:
**02.05.84 Bulletin 84/18**

(84) Designated Contracting States:
**AT CH DE FR GB IT LI NL SE**

(56) References cited:
**AT - B - 313 531
CH - A - 606 930
DD - A - 137 616
DE - A - 1 575 260
DE - A - 1 750 133
DE - A - 2 435 252
DE - A - 2 518 048
DE - B - 2 833 801
GB - A - 1 041 170
GB - A - 1 116 700**

(73) Proprietor: **NORDISK VENTILATOR CO. A/S
DK-4700 Naestved (DK)**

(72) Inventor: **Hougaard, Tage
Chr. Winthersvej 118
DK-4700 Naestved (DK)**

(74) Representative: **Brooke-Smith, Fred et al,
STEVENS, HEWLETT & PERKINS 5 Quality Court
Chancery Lane
London WC2A 1HZ (GB)**

Courier Press, Leamington Spa, England.

An edge connection arrangement for connecting premanufactured duct sections
and/or equipment cabinets.

This invention relates to an edge connection arrangement for connecting premanufactured duct sections and/or equipment cabinets having a uniform, mainly polygonal cross-section in extension of each other, particularly for use in air conditioning systems, comprising U-shaped lip members each having an outwardly facing, relatively narrow opening on the opposing end edges of the side walls of adjacent sections or cabinets, and a clamping strip member having two substantially parallel legs for introduction into the opening of each of a pair of adjoining lip members.

It is known to use edge connection arrangements of this kind in the assembling of minor plate sections into greater side walls of ventilation ducts or equipment cabinets, as well as assembling of finished duct sections or equipment cabinets in extension of each other in joints extending in a plane perpendicular to the axial direction.

In most prior art edge connection arrangements, use is made of a connection strip in the form of a sliding strip member which is pushed along lip or flange members at the adjoining edges from the ends thereof, so that arrangement of the sliding strip member requires an external space corresponding to the complete length of the joint. Edge connection arrangements of this kind are known, inter alia, from Danish patent specifications Nos. 111,548 and 114,106, as well as the specification of published Danish patent application No. 3894/68.

From British patent specification No. 1,287,676 and Danish patent specification No. 130,198, edge connection arrangements are known, however, in which this disadvantage has been avoided by use of a connecting member constituted by a clamping strip member, which is pressed onto the lip or flange members transversely to the longitudinal direction thereof. These prior art solutions have in common that they require the use of a rubber-elastic sealing strip, the correct arrangement of which between the adjoining flange members will either require the use of a special tool, which is drawn longitudinally through the resilient clamping strip member before arrangement thereof, or require the use of a sealing strip having a special H-shaped cross-section, the correct arrangement of which between the adjoining flange members before arrangement of the clamping strip member is a relatively time consuming operation.

Whether sliding or clamping strip members are used as connection members, the prior art connection arrangements have in common that they usually require the use of a sealing strip of rubber-elastic material, for example, and that the flange members project as a relatively wide bead on the external sides of the duct sections and/or equipment cabinets, so as to interrupt the otherwise flat character of the side walls thereof.

From British patent specification No. 1,116,700, an edge connection arrangement is known, which is intended for double-plate wall sections having intermediate insulation and intended for arrangement in planar extension of each other, in which the use of special sealing strips is avoided by arranging U-shaped lip members on the opposing edges of the wall sections at both plate sides and connecting these lip members, which are constructed to be resilient by means of clamping strip members which are also U-shaped in cross-section.

Thus, since this prior art edge connection arrangement requires clamping strip members to be arranged on both sides of the wall sections, it is only suitable for in situ assembling of plate shaped sections into side walls of an equipment cabinet or chamber, which in accordance with the British patent specification must be supported on a supporting structure by means of U-shaped rails formed particularly for this purpose.

It is the object of the invention to provide an edge connection arrangement of the kind mentioned for connecting premanufactured duct sections and/or equipment cabinets for assembling such sections or cabinets, for example, into a central unit for an air conditioning system, whereby the sections or cabinets in question may be embodied as frame structures having single plate side walls and, possibly, insulating material on the interior sides thereof and, in which, by means of the same edge connection arrangement along the connecting joints on all sides of the polygonal sections, excellent strength properties of the joint and, in most applications, a sufficiently tight joint are obtained simultaneously and without the use of any additional sealing strip.

According to the invention, this is obtained by means of an edge connection arrangement which is characterized in that said clamping strip member has a substantially T-shaped cross-section with legs being bent to extend substantially perpendicularly relative to a double-walled central part, which is formed to engage edge regions of said side walls, said legs being formed as resilient tongues biased away from each other.

By forming the clamping strip member as a T-shaped profile, the central part of which engages edge regions of the external sides of the adjacent side walls of two adjoining sections, and the legs of which are formed as resilient tongues, a very strong joint is obtained by arranging such clamping strip members on the external sides of the sections solely. No other connecting means are required between the sections, and neither is any common support structure required, as a result of which premanufactured sections and equipment cabinets may be assembled to a complete unit ready for installation and provided with simple supporting legs, such as a central unit for an air conditioning system comprising cabinets accommodating one or more fans with associated humidification, heating, filtering and damping means.

The invention opens the possibility of manufacturing a varied program of duct sections or cabinets for equipment in the production stage as individual premanufactured complete components having a suitable size with respect to transportation and manipulation, supplying a number of such components corresponding to the actual demand and final in situ assembling into a unit ready for installation with a minimum of mounting work.

In the completed joint, only the flat central portion of the T-shaped clamping strip member will be visibile from the outside. Even without the use of a sealing strip, there will be substantially no possibility for air passage through the joint, since, on one hand, the mutually engaging parts of the lip members of the two duct sections when connected in this way will be pressed into firm engagement with one another by the resilient tongues of the clamping strip member and, on the other hand, the double side walls of the central portion will be compressed opposite the resilient tongues, whereby the longitudinal external edges of the central portion will be pressed into engagement with the side walls of the sections.

A particularly tight sealing between the lip members is obtained by forming each of the resilient tongues of the clamping strip member with a free edge portion which is bent away from the other resilient tongue. A clamping strip member of this embodiment may be manufactured from relatively thin sheet material, if a reinforcing strip is introduced in the double-walled central part.

In the following, the invention will be explained in further detail with reference to the schematical drawings, in which

Fig. 1 illustrates the use of an edge connection arrangement according to the invention for assembling two equipment cabinets in extension of each other,

Figs. 2 and 3 show a preferred embodiment of the clamping strip member and the lip members of the edge connection arrangement,

Fig. 4 shows an edge connection arrangement with a clamping strip member and lip members as shown in Figs. 2 and 3 in mutual engagement, and

Fig. 5 shows a modification of the clamping strip member.

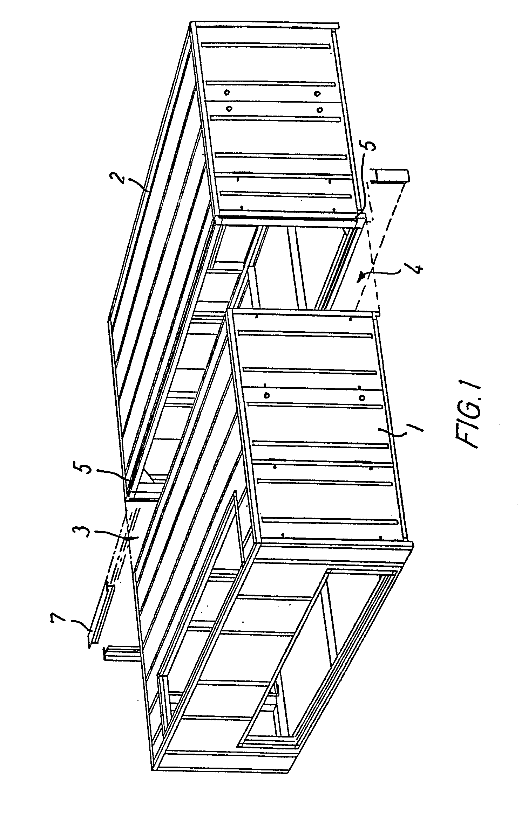

Fig. 1 is a perspective view of two equipment cabinets 1 and 2 incorporated as parts of a central unit in an air conditioning system and accommodating, for example, one or more fans with associated air conditioning equipment in the form of filters, humidifiers and/or heating members, as well as control dampers. The cabinets 1 and 2, which are shown in a slightly exploded condition in the figure, are to be assembled in extension of each other by means of an edge connection arrangement according to the invention along joints 3, 4 extending in a plane perpendicular to the axial direction of the central unit, which in this case has a rectangular cross-section.

In the preferred embodiment of the edge connection arrangement, separate edge strip members 5 are arranged along each of the opposing end edges of the side walls of the two cabinets 1 and 2, said edge strip members being provided with U-shaped lip members 6 having outwardly facing relatively narrow openings, and a substantially T-shaped clamping strip member 7 is used for connecting the two edge strip members 5 with the lip members 6 engaging each other, said clamping strip member having two resilient legs 8 and 9, which are introduced into the outwardly facing openings of the respective lip members 6 when the clamping strip member 7 is positioned transversely to the longitudinal direction of the lip members 6 and interlock said lip members in a safe and tight mutual engagement.

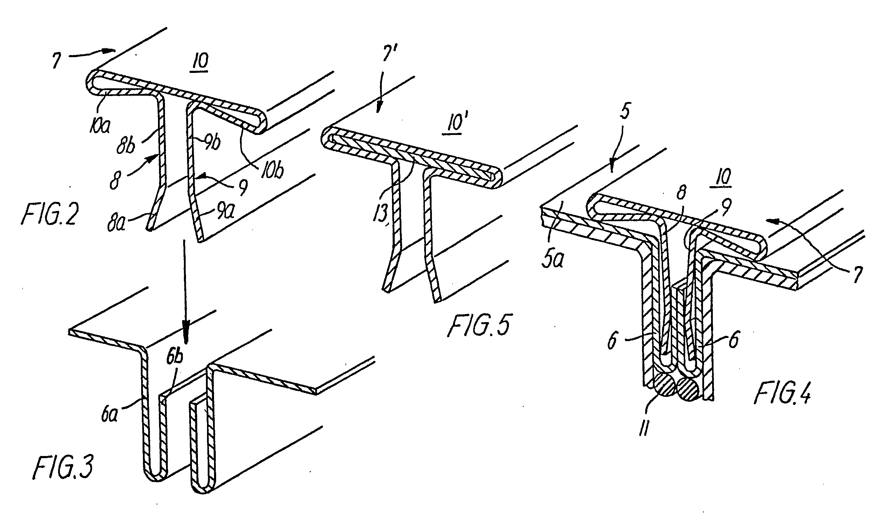

As shown in Fig. 2, the clamping strip member 7 may be formed by longitudinal bending of a strip-shaped member with the two resilient legs 8 and 9 bent substantially perpendicularly relative to a double-walled central part 10 having walls 10a and 10b. With the two resilient legs 8 and 9 biased away from each other, a strong spring action is obtained with this construction to secure a tight interlocking mutual engagement of the lip members. Each of the resilient legs 8 and 9 has a free edge part 8a and 9a, respectively, which is bent off from the part 8b and 9b, respectively, of the leg extending substantially perpendicularly relative to the central part 10 away from the other resilient leg 9 or 8, respectively.

As shown in detail in Fig. 3, the U-shaped lip members 6 are formed with two substantially parallel legs 6a and 6b, the separation of which matches the width of the resilient legs 8 and 9, so that the width of the U-shaped opening between the legs 6a and 6b is somewhat smaller than the extension of the free edge part 8a, 9a of each resilient leg 8, 9 perpendicular to the part 8b, 9b extending perpendicular to the central part 10.

In the embodiment shown in Fig. 3, the leg 6b of each lip member 6 intended for engagement with an opposing lip member is somewhat shorter than the leg 6a facing the duct section or cabinet with the height of the leg 6b exceeding, however, the height of the free edge part 8a and 9a, respectively, of the corresponding resilient leg of the clamping strip member 7. By this construction, it is secured that the longitudinal external edges of the central part 10 of the clamping strip member 7 are brought into tight engagement against the upper side of the edge strip members 5, as shown in Fig. 4.

As shown in Fig. 4, the spring action of the clamping strip member 7 and the dimension thereof relative to the lip members 6 will result in slight straightening of the free edge parts 8a and 9a, respectively, of the resilient legs 8 and 9, whereby the spring forces in the legs 8 and 9 will attempt to press the legs 6a and 6b of each lip member away from each other, so that the legs 6b of the lip members engaging each other will be pressed into a safe and tight engagement, so that substantially no possibility will exist for any air passage through the edge connection arrangement.

When assembling the cabinets 1 and 2 as shown in Fig. 1, the clamping strip members 7 are positioned by hammering after alignment of the cabinets 1 and 2 accommodating, for example, the aforementioned equipment, with the lip members 6 of the edge strip members 5 in mutual engagement, so that arrangement of the member takes place transversely to the longitudinal direction of the assembled unit. After arrangement, only the flat central parts 10 of the clamping strip members 7 will extend outside the flat side walls of the sections or cabinets.

Even if the lip member 6 in the embodiment shown is formed by separate edge strip members 5 having a substantially L-shaped cross-section as shown in Figs. 3 and 4, one leg of which forms the lip member 6, whereas the other leg 5a serves for securing the edge strip member 5 relative to a side wall of a section or a cabinet by spot welding, for example, the lip members may alternatively be formed integrally with the side walls by bending of edge regions thereof.

In cases where a further improved safety against air passage is desired beyond the normal good sealing obtained by an edge connection arrangement according to the invention, a separate sealing strip 11 may, as shown in Fig. 4, be positioned below the bottom of each of the U-shaped lip members 6 in engagement, for example, with a shoulder part 12 below the lip member 6. Such sealing strips 11 must have a somewhat greater width than the lip members 6.

In the modification shown in Fig. 5, a flat reinforcing strip 13 is introduced into the double-walled central part 10' of the T-shaped clamping strip member 7'. Thereby the clamping strip member may as a whole be manufactured with sufficient strength from a relatively thin sheet material.

## Claims

1. An edge connection arrangement for connecting premanufactured duct sections and/or equipment cabinets (1, 2) having a uniform, mainly polygonal cross-section in extension of each other, particularly for use in air conditioning systems, comprising U-shaped lip members (6) each having an outwardly facing, relatively narrow opening on the opposing end edges of the side walls of adjacent sections or cabinets, and a clamping strip member (7) having two substantially parallel legs (8, 9) for introduction into the opening of each of a pair of adjoining lip members (6), characterized in that said clamping strip member (7) has a substantially T-shaped cross-section with said legs (8, 9) being bent to extend substantially perpendicularly relative to a double-walled central part (10) which is formed to engage edge regions of said side walls, said legs (8, 9) being formed as resilient tongues biased away from each other.

2. An edge connection arrangement as claimed in claim 1, characterized in that each of said resilient legs (8, 9) is formed with a free edge part (8a, 9a) which is bent away from the other resilient leg.

3. An edge connection arrangement as claimed in claim 2, characterized in that said free edge part (8a, 9a) is bent away to extend a distance perpendicular to the part (8b, 9b) of the resilient leg (8, 9) which is greater than the width of the openings of said lip members (6).

4. An edge connection arrangement as claimed in claim 1, 2 or 3, characterized in that a reinforcing strip (13) is inserted into the double-walled central part (10) of the strip member (7).

## Revendications

1. Dispositif de connexion marginale pour éléments de conduits préfabriqués et/ou armoires d'outillage (1, 2) de section uniforme, essentiellement polygonale dans le prolongement l'une de l'autre, en particulier pour emploi dans des systèmes de climatisation d'air, comprenant des profilés (6) à lèvre en U présentant chacun, vers l'extérieur, une ouverture relativement étroite sur les rebords opposés des parois latérales d'éléments adjacents ou armoires adjacentes, et un profilé de verrouillage (7) présentant deux branches (8, 9) essentiellement parallèles à introduire dans l'ouverture de chacun d'une paire de profilés à lèvres adjacentes (6), caractérisé en ce que ledit profilé de verrouillage (7) a une section essentiellement en T, lesdites branches (8, 9) étant recourbées pour s'étendre essentiellement perpendiculairement à une partie centrale (10) à double paroi agencée pour venir en appui contre le rebord desdites parois latérales, lesdites branches (8, 9) étant agencées comme des langues élastiques précontraintes en éloignement l'une de l'autre.

2. Dispositif de connexion marginale selon la revendication 1, caractérisé en ce que chacune desdites branches élastiques (8, 9) comprend un rebord libre (8a, 9a) incurvé en éloignement de l'autre branche élastique.

3. Dispositif de connexion marginale selon la revendication 2, caractérisé en ce que ledit rebord libre (8a, 9a) est incurvé pour, en direction perpendiculaire à la partie (8b, 9b) de la branche élastique (8, 9), couvrir une distance supérieure à la largeur des ouvertures desdits profilés à lèvre (6).

4. Dispositif de connexion marginale selon les revendications 1, 2 ou 3, caractérisé en ce qu'une bande de renfort (13) est insérée dans la partie centrale (10) à double paroi du profilé (7).

**Patentansprüche**

1. Randverbindungsvorrichtung für die Verbindung vorfabrizierter Leitungsabschnitte und/oder Geräteschränke (1, 2) mit einem gleichmässigen, hauptsächlich polygonalen Querschnitt in Verlängerung voneinander, insbesondere zum Gebrauch in Luftbehandlungsanlagen, umfassend U-förmige Lippenelemente (6) mit jeweils einer nach aussen gekehrten, verhältnismässig engen Öffnung an einander zugekehrten Endrändern der Seitenwände von benachbarten Abschnitten oder Schränken und ein Klemmstreifenelement (7) mit zwei im wesentlichen parallelen Schenkeln (8, 9) zum Einführen in die Öffnung von jeweils dem einen eines Paares benachbarter Lippenelemente (6), dadurch gekennzeichnet, dass das Klemmstreifenelement (7) einen im wesentlichen T-förmigen Querschnitt mit Schenkeln (8, 9) aufweist, die gebogen sind, so dass sie sich im wesentlichen rechtwinklig zu einem doppelwandigen Mittenteil (10) erstrecken, welcher Mittenteil zum Anliegen gegen Randbereiche der genannten Seitenwände ausgebildet ist, wobei die genannten Schenkel (8, 9) als in voneinander abgekehrten Richtungen vorgespannte Federzungen ausgebildet sind.

2. Randverbindungsvorrichtung nach Anspruch 1, dadurch gekennzeichnet, dass die federnden Schenkel (8, 9) jeweils mit einem in dem anderen Schenkel abgekehrter Richtung gebogenen freien Randteil (8a, 9a) ausgebildet sind.

3. Randverbindungsvorrichtung nach Anspruch 2, dadurch gekennzeichnet, das der genannte freie Randteil (8a, 9a) gebogen ist, so dass er sich erstreckt über eine Strecke rechtwinklig zum Teil (8a, 9a) des federnden Schenkels (8, 9), welche Strecke grösser ist als die Breite der Öffnungen der Lippenelemente (6).

4. Randverbindungsvorrichtung nach Anspruch 1, 2 oder 3 dadurch gekennzeichnet, dass ein Verstärkungsstreifen (13) in den doppelwandigen Mittenteil (10) des Streifenelementes (7) eingeführt ist.

FIG.1

0 034 888

FIG.2

FIG.3

FIG.5

FIG.4

0 034 888